# EUROPEAN PATENT APPLICATION

(11) **EP 4 800 261 A1**
(43) Date of publication of application: **02.09.2026**
(21) Application number: 25741954.9
(22) Date of filing: 15.01.2025
(51) Int. Cl.: F16F 1/12

(54) **SUSPENSION COIL SPRING DEVICE**

(30) Priority: 16.01.2024 US 202463621119 P
(71) Applicant: NHK Spring Co., Ltd., Yokohama-shi, Kanagawa 236-0004 (JP)
(72) Inventor: HASUMI, Satoshi, Yokohama-shi, Kanagawa 236-0004 (JP); MATSUDA, Tsuyoshi, Yokohama-shi, Kanagawa 236-0004 (JP); IBANO, Daisuke, Yokohama-shi, Kanagawa 236-0004 (JP)
(74) Representative: V.O.
(86) International application number: PCT/JP2025/000988
(87) International publication number: WO 2025/154729

(57) **Abstract**

A suspension coil spring device includes a coil spring including an upper end coil portion and a lower end coil portion, in which a coating layer is bonded to at least a part of at least the lower end coil portion, and a spring receiving member supporting the lower end coil portion, in which at least a part of the spring receiving member supports the lower end coil portion via the coating layer, the coating layer is disposed on the spring receiving member in a non-adhered state, and the coil spring is provided with a coating film, and a material of the coating film is different from a material of the coating layer.

## Description

### TECHNICAL FIELD

The present invention relates to a suspension coil spring device.

Priority is claimed on United States Patent Application No. 63/621,119, filed January 16, 2024, the content of which is incorporated herein by reference.

### BACKGROUND ART

A suspension coil spring device including a coil spring is used for a suspension mechanism of a vehicle such as an automobile, a suspension of a device, or the like. When foreign matter such as flying stones collides with the coil spring while the automobile is traveling, a surface of the coil spring is damaged, causing breakage due to corrosion or the like. Therefore, the surface of the coil spring is protected by a coating film.

Patent Document 1 and Patent Document 2 propose a suspension coil spring device in which a spring receiving member is attached to a coil spring. The coil spring and the spring receiving member are joined together with an adhesive. By providing the adhesive in a gap between the coil spring and the spring receiving member, it is possible to prevent pebbles, sand, mud, or the like from entering the gap between the coil spring and the spring receiving member, thereby suppressing damage to the coating film of the coil spring.

### Citation List

### Patent Documents

Patent Document 1: Japanese Unexamined Patent Application, First Publication No. 2017-015249
Patent Document 2: PCT International Publication No. WO2020/040292

### SUMMARY OF INVENTION

### Technical Problem

In the suspension coil spring device in the related art, there is room for improvement in a structure for suppressing damage to the coating film of the coil spring.

An object of the present invention is to provide a suspension coil spring device capable of suppressing damage to a coating film of a coil spring.

### Solution to Problem

A suspension coil spring device according to a first aspect of the present invention includes a coil spring including an upper end coil portion and a lower end coil portion, in which a coating layer is bonded to at least a part of at least the lower end coil portion, and a spring receiving member supporting the lower end coil portion, in which at least a part of the spring receiving member supports the lower end coil portion via the coating layer, the coating layer is disposed on the spring receiving member in a non-adhered state, and the coil spring is provided with a coating film, and a material of the coating film is different from a material of the coating layer.

A suspension coil spring device according to a second aspect of the present invention includes a coil spring including an upper end coil portion and a lower end coil portion, in which a coating layer is bonded to at least a part of at least the lower end coil portion, and a spring receiving member supporting the lower end coil portion, in which the coating layer and the spring receiving member are provided at different positions in a coil circumferential direction around a coil axis of the coil spring, and the coil spring is provided with a coating film, and a material of the coating film is different from a material of the coating layer.

### Advantageous Effects of Invention

With the suspension coil spring device of the present invention, it is possible to suppress damage to the coating film of the coil spring.

### BRIEF DESCRIPTION OF DRAWINGS

[FIG. 1] A perspective view showing a suspension coil spring device according to a first embodiment.
[FIG. 2] A cross-sectional view taken along a line II-II shown in FIG. 1.
[FIG. 3] A diagram showing an assembly method of the suspension coil spring device according to the first embodiment.
[FIG. 4] A cross-sectional view taken along a line IV-IV shown in FIG. 1.
[FIG. 5] A cross-sectional view showing a suspension coil spring device according to a modification example of the first embodiment.
[FIG. 6] A cross-sectional view of a suspension coil spring device according to a second embodiment.
[FIG. 7] A cross-sectional view of the suspension coil spring device according to the second embodiment.
[FIG. 8] A bottom view of a suspension coil spring device according to a third embodiment.

### DESCRIPTION OF EMBODIMENTS

### <First embodiment>

A suspension coil spring device according to a first embodiment of the present invention will be described in detail below with reference to the drawings.

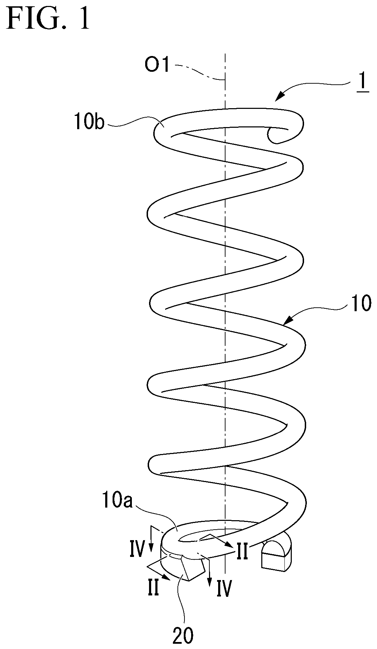

As shown in FIG. 1, a suspension coil spring device 1 of the present embodiment includes a coil spring 10 and a spring receiving member 20. The coil spring 10 is formed into a spiral shape and has a pair of upper and lower end coil portions 10a and 10b.

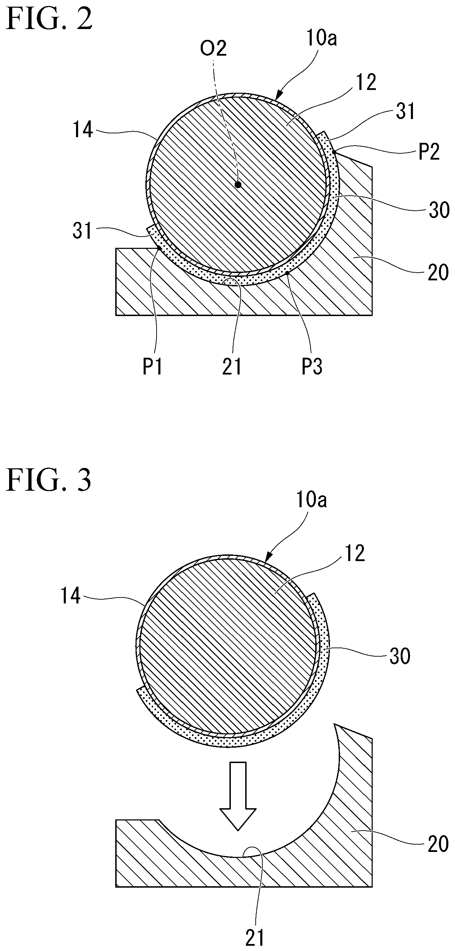

The lower end coil portion 10a of the pair of upper and lower end coil portions 10a and 10b is supported by the spring receiving member 20. As shown in FIG. 2, a coating layer 30 is bonded to at least a part of the lower end coil portion 10a. At least a part of the spring receiving member 20 supports the lower end coil portion 10a via the coating layer 30. The coating layer 30 is provided on the spring receiving member 20 in a non-adhered state.

The upper end coil portion 10b of the pair of upper and lower end coil portions 10a and 10b can be accommodated in a spring holding member (not shown). The suspension coil spring device 1 is used for a suspension mechanism of a vehicle such as an automobile, a suspension of a device, or the like. When the suspension coil spring device 1 is used in a suspension mechanism of an automobile, the suspension coil spring device 1 buffers or damps a vertical motion of a vehicle in cooperation with a damper.

The coil spring 10 includes a wire 12 and a coating film 14 on a surface of the wire 12.

The wire 12 has a circular cross section. Examples of a material of the wire 12 include spring steel, hardened spring steel, and fiber-reinforced plastic.

The coating film 14 protects the wire 12 from collision with flying stones and corrosion. Examples of a material of the coating film 14 include an epoxy-based resin.

The spring receiving member 20 has an arc shape extending around a coil axis O1 when viewed from a direction along the coil axis O1 of the coil spring 10. For example, the spring receiving member 20 extends over an angular range of 180° or more and 360° or less around the coil axis O1. A material of the spring receiving member 20 may be, for example, metal or rubber.

The spring receiving member 20 is formed in a region including a lower end of the lower end coil portion 10a. A recessed portion 21 is provided on an upper surface of the spring receiving member 20. The recessed portion 21 extends around the coil axis O1. The lower end coil portion 10a to which the coating layer 30 is bonded is inserted into the recessed portion 21. An inner surface of the recessed portion 21 has a concave curved shape that curves along an outer peripheral surface of the coil spring 10 in a cross-sectional view orthogonal to a central axis O2 of the wire 12.

In the following description, a direction around the coil axis O1 when viewed from the direction along the coil axis O1 of the coil spring 10 is also referred to as a coil circumferential direction. A direction around the central axis O2 when viewed from the direction along the central axis O2 of the wire 12 is also referred to as a wire circumferential direction.

The coating layer 30 is bonded to the coating film 14 of the lower end coil portion 10a. The coating layer 30 is applied to the coating film 14 of the lower end coil portion 10a, for example. The coating layer 30 is provided along the outer peripheral surface of the lower end coil portion 10a. The coating layer 30 is provided to cover at least a lower end portion of the outer peripheral surface of the lower end coil portion 10a. A material of the coating film 14 and a material of the coating layer 30 are different from each other. The phrase "the material of the coating film 14 and the material of the coating layer 30 are different from each other" includes a case where the coating film 14 and the coating layer 30 have the same epoxy resin as a main component but have different compositions.

The material of the coating layer 30 may be either a thermoplastic resin composition or a composition for forming a thermosetting resin. Examples of the thermoplastic resin include an acrylic resin, a polystyrene resin, a polyethylene resin, a polypropylene resin, a polyamide resin, a nylon resin, a vinyl chloride resin, a polyacetal resin, a polycarbonate resin, a polyphenylene ether resin, a polybutylene terephthalate resin, a polyphenylene sulfone resin, a polysulfone resin, a polyarylate resin, and a polyetherimide resin. Examples of the thermosetting resin include a urethane resin, an epoxy resin, a cyanate resin, a melamine resin, and a phenol resin. Other examples of the material of the coating layer 30 include a rubber material such as natural rubber, butadiene rubber, chloroprene rubber, nitrile butadiene rubber, and styrene butadiene rubber.

As shown in FIG. 3, the coating layer 30 is placed on the spring receiving member 20 in a state where the coating layer 30 is bonded to the lower end coil portion 10a. The coating layer 30 is placed on the spring receiving member 20 in a non-adhered state. The coating layer 30 and the spring receiving member 20 are disposed to contact each other. In addition, the lower end coil portion 10a is inserted into the recessed portion 21, so that the lower end coil portion 10a and the coating layer 30 are fixed to the spring receiving member 20. A hardness of the coating layer 30 is higher than a hardness of the spring receiving member 20. In addition, a hardness of the coating film 14 is higher than the hardness of the spring receiving member 20.

As shown in FIG. 2, in the present embodiment, in a cross-sectional view orthogonal to the central axis O2 of the wire 12, the coating layer 30 extends outward beyond an end portion of the recessed portion 21. That is, the coating layer 30 has a first protruding portion 31 (protruding portion) that extends outward beyond the spring receiving member 20 in the wire circumferential direction around the central axis O2 of the wire 12.

At a contact portion between the spring receiving member 20 and the coating layer 30, in a cross-sectional view orthogonal to the central axis O2 of the wire 12, a radius of curvature of an inner surface of the spring receiving member 20 (more specifically, the inner surface of the recessed portion 21) is smaller than a radius of curvature of an outer surface of the coating layer 30. With this configuration, at the contact portion, a surface pressure generated between the spring receiving member 20 and the coating layer 30 is higher at end portions P1 and P2 in the wire circumferential direction than at a center portion P3 in the wire circumferential direction.

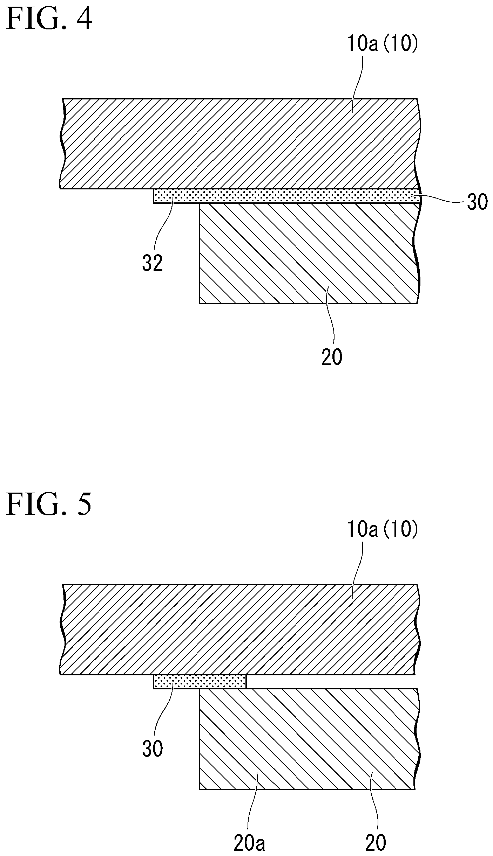

In addition, as shown in FIG. 4, the coating layer 30 has a second protruding portion 32 (protruding portion) that extends outward beyond the spring receiving member 20 in the coil circumferential direction around the coil axis O1.

In the shown example, the coating layer 30 is provided to contact the entire spring receiving member 20 in the coil circumferential direction. However, as shown in FIG. 5, the coating layer 30 need only be provided at least at a position in contact with the end portion 20a of the spring receiving member 20 in the coil circumferential direction.

As described above, the suspension coil spring device 1 of the present embodiment includes the coil spring 10 including the upper end coil portion 10b and the lower end coil portion 10a, in which the coating layer 30 is bonded to at least a part of at least the lower end coil portion 10a, and the spring receiving member 20 that supports the lower end coil portion 10a. At least a part of the spring receiving member 20 supports the lower end coil portion 10a via the coating layer 30. The coating layer 30 is disposed on the spring receiving member 20 in a non-adhered state. The coil spring 10 is provided with the coating film 14, and the material of the coating film 14 is different from the material of the coating layer 30.

With the above configuration, it is possible to suppress the entry of foreign matter such as pebbles, sand, and mud between the lower end coil portion 10a and the spring receiving member 20. In addition, even when foreign matter enters between the lower end coil portion 10a and the spring receiving member 20, damage to the coating film 14 can be prevented by the coating layer 30.

In addition, the spring receiving member 20 is provided with the recessed portion 21 into which the lower end coil portion 10a is inserted.

With the above configuration, the lower end coil portion 10a can be fixed to the spring receiving member 20 by the recessed portion 21. Therefore, the stability of the coil spring 10 is improved.

In addition, the coating layer 30 has the protruding portions 31 and 32 that extend outward beyond the spring receiving member 20. Specifically, the coating layer 30 has the first protruding portion 31 that extends outward beyond the spring receiving member 20 in the wire circumferential direction. The coating layer 30 has the second protruding portion 32 that extends outward beyond the spring receiving member 20 in the coil circumferential direction.

With the above configuration, by providing the protruding portions 31 and 32, the gap between the lower end coil portion 10a and the spring receiving member 20 can be filled, and the entry of foreign matter between the lower end coil portion 10a and the spring receiving member 20 can be more effectively suppressed.

In addition, at the contact portion between the spring receiving member 20 and the coating layer 30, in a cross-sectional view orthogonal to the central axis O2 of the wire 12 of the coil spring 10, the radius of curvature of the inner surface of the spring receiving member 20 is smaller than the radius of curvature of the outer surface of the coating layer 30.

At the contact portion between the spring receiving member 20 and the coating layer 30, the surface pressure generated between the spring receiving member 20 and the coating layer 30 is higher at the end portion in the wire circumferential direction than at the center portion in the wire circumferential direction.

With the above configuration, the surface pressure at the end portion in the wire circumferential direction at the contact portion between the spring receiving member 20 and the coating layer 30 can be improved, so that the entry of foreign matter between the lower end coil portion 10a and the spring receiving member 20 can be more effectively suppressed.

In addition, the hardness of the coating layer 30 is higher than the hardness of the spring receiving member 20.

With the above configuration, for example, even when foreign matter enters between the coating layer 30 and the spring receiving member 20, the foreign matter can be received on the spring receiving member 20 side, and damage to the coating layer 30 and the coating film 14 can be prevented.

In addition, the coating layer 30 is provided at least at a position in contact with the end portion 20a of the spring receiving member 20 in the coil circumferential direction.

With this configuration, the wear of the spring receiving member 20 and the coating film 14 caused by repeated contact and separation between the spring receiving member 20 and the coating film 14 when the coil spring 10 expands and contracts can be reduced.

<Second embodiment>

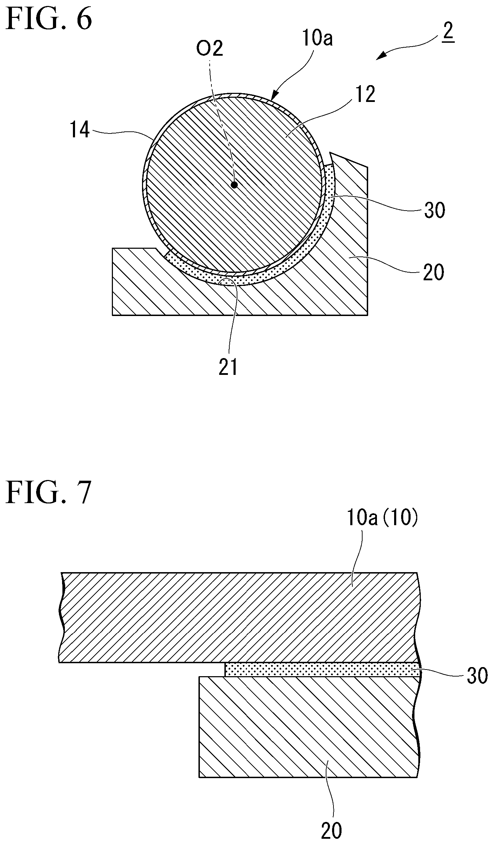

Next, a suspension coil spring device 2 according to a second embodiment of the present invention will be described with reference to FIGS. 6 and 7.

In the second embodiment, the same portions as the components in the first embodiment are denoted by the same reference numerals, the description thereof will be omitted, and only the different points will be described.

As shown in FIG. 6, in the suspension coil spring device 2 according to the present embodiment, in a cross-sectional view orthogonal to the central axis O2 of the wire 12, the coating layer 30 is disposed inward of the end portion of the recessed portion 21. That is, an end portion of the coating layer 30 in the wire circumferential direction is disposed inward of the spring receiving member 20 in the wire circumferential direction.

In addition, as shown in FIG. 7, an end portion of the coating layer 30 in the coil circumferential direction is disposed inward of the spring receiving member 20 in the coil circumferential direction.

Even with the above configuration, it is possible to suppress the entry of foreign matter such as pebbles, sand, and mud between the lower end coil portion 10a and the spring receiving member 20. In addition, even when foreign matter enters between the lower end coil portion 10a and the spring receiving member 20, damage to the coating film 14 can be prevented by the coating layer 30.

In addition, since the amount of the coating layer 30 can be reduced as compared with a case where the coating layer 30 has the protruding portions 31 and 32, the weight of the suspension coil spring device 2 can be reduced, and the manufacturing cost can also be reduced.

The end portion of the coating layer 30 in the wire circumferential direction may be disposed inward of the spring receiving member 20 in the wire circumferential direction, and the end portion of the coating layer 30 in the coil circumferential direction may extend outward beyond the spring receiving member 20 in the coil circumferential direction (that is, the second protruding portion 32 may be provided).

The end portion of the coating layer 30 in the coil circumferential direction may be disposed inward of the spring receiving member 20 in the coil circumferential direction, and the end portion of the coating layer 30 in the wire circumferential direction may extend outward beyond the spring receiving member 20 in the wire circumferential direction (that is, the first protruding portion 31 may be provided).

### <Third embodiment>

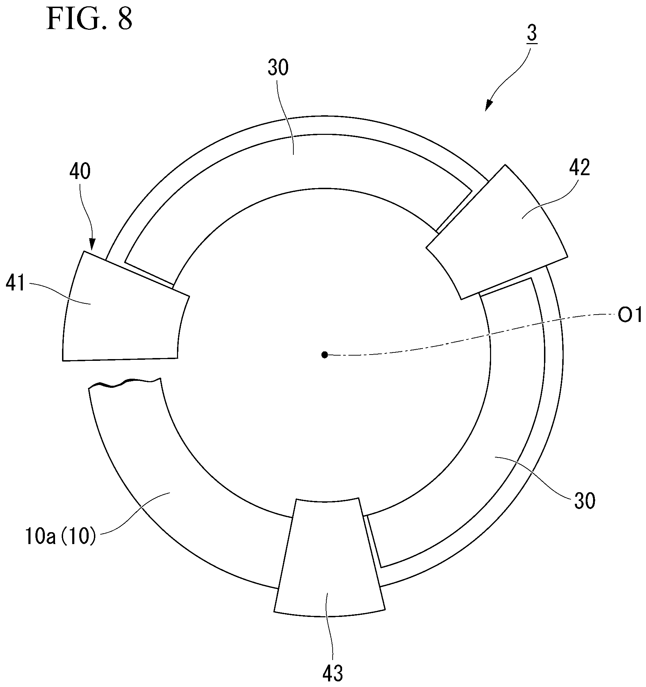

Next, a suspension coil spring device 3 according to a third embodiment of the present invention will be described with reference to FIG. 8. FIG. 8 is a bottom view of the suspension coil spring device 3.

In the third embodiment, the same portions as the components in the first embodiment are denoted by the same reference numerals, the description thereof will be omitted, and only the different points will be described.

In the present embodiment, the suspension coil spring device 3 includes a spring receiving member 40 instead of the spring receiving member 20. The spring receiving member 40 has a first portion 41, a second portion 42, and a third portion 43 that are disposed to be spaced apart from each other in the coil circumferential direction. In the coil circumferential direction, the first portion 41, the second portion 42, and the third portion 43 are provided not to overlap the center of the lower end coil portion 10a in the coil circumferential direction. The coating layer 30 is provided between the first portion 41 and the second portion 42 and between the second portion 42 and the third portion 43 in the coil circumferential direction. The coating layer 30 and the spring receiving member 40 (the first portion 41, the second portion 42, and the third portion 43) are provided at different positions in the coil circumferential direction. Therefore, in the present embodiment, the coating layer 30 does not contact the spring receiving member 40.

Here, in the lower end coil portion 10a, the stress generated when a load is applied to the coil spring 10 peaks at an inner diameter side of the coil spring 10. A position where the stress is high in the lower end coil portion 10a is referred to as a high-stress position. In the present embodiment, a range in which the spring receiving member 40 (the first portion 41, the second portion 42, and the third portion 43) and the high-stress position overlap each other is smaller than that in a case where the spring receiving member is provided continuously in the coil circumferential direction. By reducing a contact area between the spring receiving member 40 and the coil spring 10, it is possible to suppress damage to the coating film 14 caused by foreign matter being caught therebetween. The spring receiving member 40 (the first portion 41, the second portion 42, and the third portion 43) directly supports the lower end coil portion 10a without the coating layer 30. By the spring receiving member 40 supporting the lower end coil portion 10a at three points, the lower end coil portion 10a can be stably supported.

As described above, the suspension coil spring device 3 according to the present embodiment includes the coil spring 10 including the upper end coil portion 10b and the lower end coil portion 10a, in which the coating layer 30 is bonded to at least a part of at least the lower end coil portion 10a, and the spring receiving member 40 that supports the lower end coil portion 10a. The coating layer 30 and the spring receiving member 40 are provided at different positions in the coil circumferential direction. The coil spring 10 is provided with the coating film 14, and the material of the coating film 14 is different from the material of the coating layer 30.

With the above configuration, the range in which the spring receiving member 40 (the first portion 41, the second portion 42, and the third portion 43) and the high-stress position overlap each other is smaller than that in a case where a spring receiving member is provided continuously in the coil circumferential direction. Therefore, it is possible to reduce the probability of foreign matter being mixed in at least the high-stress position, and it is possible to prevent damage to the coating film 14.

The number and support range of the spring receiving members 40 and the number and support range of the coating layers 30 are not limited to the content of the present embodiment, and various forms can be adopted.

Hereinabove, preferable examples of the present invention have been described, but the present invention is not limited to these examples. Configurations can be added, omitted, and replaced, and other modifications can be made within a range not departing from the gist of the present invention. The present invention is not limited by the above description, but is limited only by the scope of the appended claims.

### INDUSTRIAL APPLICABILITY

According to the present invention, it is possible to provide a suspension coil spring device capable of suppressing damage to a coating film of a coil spring.

### REFERENCE SIGNS LIST

1, 2, 3 Suspension coil spring device
10 Coil spring
10a Lower end coil portion
10b Upper end coil portion
12 Wire
14 Coating film
20, 40 Spring receiving member
21 Recessed portion
30 Coating layer
31 First protruding portion (protruding portion)
32 Second protruding portion (protruding portion)
O1 Coil axis
O2 Central axis of wire

## Claims

1. A suspension coil spring device comprising:
a coil spring including an upper end coil portion and a lower end coil portion, in which a coating layer is bonded to at least a part of at least the lower end coil portion;
and
a spring receiving member supporting the lower end coil portion,
wherein at least a part of the spring receiving member supports the lower end coil portion via the coating layer,
the coating layer is disposed on the spring receiving member in a non-adhered state, and
the coil spring is provided with a coating film, and a material of the coating film is different from a material of the coating layer.

2. The suspension coil spring device according to Claim 1,
wherein the spring receiving member is provided with a recessed portion into which the lower end coil portion is inserted.

3. The suspension coil spring device according to Claim 1,
wherein the coating layer has a protruding portion that extends outward beyond the spring receiving member.

4. The suspension coil spring device according to Claim 3,
wherein the protruding portion has a first protruding portion that extends outward beyond the spring receiving member in a wire circumferential direction around a central axis of a wire of the coil spring.

5. The suspension coil spring device according to Claim 3,
wherein the protruding portion has a second protruding portion that extends outward beyond the spring receiving member in a coil circumferential direction around a coil axis of the coil spring.

6. The suspension coil spring device according to Claim 1,
wherein, at a contact portion between the spring receiving member and the coating layer, in a cross-sectional view orthogonal to a central axis of a wire of the coil spring, a radius of curvature of an inner surface of the spring receiving member is smaller than a radius of curvature of an outer surface of the coating layer.

7. The suspension coil spring device according to Claim 1,
wherein, at a contact portion between the spring receiving member and the coating layer, a surface pressure generated between the spring receiving member and the coating layer is higher at an end portion in a wire circumferential direction around a central axis of a wire of the coil spring than at a center portion in the wire circumferential direction.

8. The suspension coil spring device according to Claim 1,
wherein a hardness of the coating layer is higher than a hardness of the spring receiving member.

9. The suspension coil spring device according to Claim 1,
wherein the coating layer is provided at least at a position in contact with an end portion of the spring receiving member in a coil circumferential direction around a coil axis of the coil spring.

10. A suspension coil spring device comprising:
a coil spring including an upper end coil portion and a lower end coil portion, in which a coating layer is bonded to at least a part of at least the lower end coil portion;
and
a spring receiving member supporting the lower end coil portion,
wherein the coating layer and the spring receiving member are provided at different positions in a coil circumferential direction around a coil axis of the coil spring, and
the coil spring is provided with a coating film, and a material of the coating film is different from a material of the coating layer.
